# EUROPÄISCHE PATENTANMELDUNG

(11) **EP 4 410 753 A1**
(43) Veröffentlichungstag der Anmeldung: **07.08.2024**
(21) Anmeldenummer: 23217479.7
(22) Anmeldetag: 18.12.2023
(51) Int. Cl.: C03C 23/00, B23K 26/352

(54) **OBERFLÄCHENSTRUKTURIERTES GLASELEMENT UND VERFAHREN ZU DESSEN HERSTELLUNG**

(30) Priorität: 31.01.2023 DE 102023102204
(71) Anmelder: SCHOTT Technical Glass Solutions GmbH, 07745 Jena (DE)
(72) Erfinder: BARTHOLOME, Patrick, 07745 Jena (DE); WIESEKE, Hubert, 07745 Jena (DE); VON FINTEL, Sandra, 07745 Jena (DE); DREISOW, Felix, 07745 Jena (DE)
(74) Vertreter: Schott Corporate IP

(57) **Zusammenfassung**

Der Erfindung liegt die Aufgabe zugrunde, eine Festigkeitsminderung durch Markierungen, die mit einem materialabtragenden Verfahren in ein Glas eingefügt werden, möglichst gering zu halten. Dazu ist ein Glaselement (1) mit einer Oberflächenstrukturierung (9) vorgesehen, welche zumindest einen strukturierten Bereich (90) der Glasoberfläche (2) umfasst, welcher durch Glasabtrag eine höhere Rauigkeit aufweist als ein angrenzender, unstrukturierter Bereich (91) der Glasoberfläche (2), und wobei der strukturierte Bereich (90) ein insbesondere mittels Spannungsdoppelbrechung messbares mechanisches Spannungsprofil aufweist, wobei gilt:
- der strukturierte Bereich (90) weist an der Glasoberfläche (2) eine Druckspannung auf, die betragsmäßig höher ist, als die Spannung im angrenzenden unstrukturierten Bereich (91), und wobei der strukturierte Bereich (90) weiterhin zumindest eine der folgenden Eigenschaften aufweist:
- die Druckspannung wird betragsmäßig mit wachsender Tiefe kleiner und geht in eine Zugspannung über, wobei die maximale Zugspannung betragsmäßig kleiner ist als die Druckspannung an der Glasoberfläche (2)
- die Druckspannung hat an der Oberfläche betragsmäßig einen Wert von kleiner als 5 MPa und wird betragsmäßig mit wachsender Tiefe kleiner.

## Beschreibung

### Beschreibung:

Die Erfindung betrifft allgemein das Strukturieren von Gläsern. Insbesondere betrifft die Erfindung oberflächliche Strukturierungen mit hoher und einstellbarer Festigkeit.

Als Technik für das oberflächliche Strukturieren von Gläsern ist die Laserablation bekannt. Dabei wird punktweise durch einen gepulsten, intensiven Laserstrahl Material an der Oberfläche des Glases sublimiert. Mit einer Aneinanderreihung solcher Ablationspunkte und/oder mehrfacher Einwirkung des Laserstrahls auf einen Oberflächenpunkt lassen sich gezielte Strukturierungen erzeugen. Unter anderem ist es damit auch möglich, die Oberfläche mit einer Codierung, wie etwa einem QR-Code zu versehen. Dies ist beispielsweise nützlich, wenn die jeweiligen Glaselemente individuell gekennzeichnet werden sollen. Ein Problem hierbei ist allerdings, dass eine solche Markierung eine Oberflächenschädigung darstellt, welche üblicherweise auch festigkeitsreduzierend wirkt. Um diesen unerwünschten Effekt zu reduzieren, ist aus der EP 3 815 916 A1 ein Verfahren bekannt, bei welchem zur Ermittlung eines Spannungsparameters für das zu markierende Objekt eine finite Elemente-Rechnung durchgeführt und die Markierung an einer Stelle eingefügt wird, bei der der Spannungsparameter unter einer bestimmten Schwelle liegt.

Die EP 3 815 915 A1 offenbart weiterhin, dass Markierungen, wie etwa die Bits eines QR-Codes, die mit Laserablation eingefügt wurden, hinsichtlich ihrer Lesbarkeit durch das Verhältnis von Tiefe zu Rauheit der ablatierten Bereiche optimiert werden können. Eine gegebenenfalls vorhandene Festigkeitsminderung wird hingegen nicht betrachtet.

Durch die Laser-Strukturierung werden aber im Allgemeinen Spannungen in der Glasoberfläche eingebracht. Hierdurch entstehen Mikrorisse. Bislang ist daher typischerweise eine thermische oder chemische Nachbehandlung notwendig. Damit geht andererseits ein zusätzlicher Prozessschritt, gegebenenfalls eine Deformation der Scheibe und ein Risiko, Oberflächendefekte durch Wärmebehandlung zu erzeugen, einher. Insbesondere Mikrorisse führen zu einer erheblich reduzierten Festigkeit, was wiederum zum Bruch der teurer und aufwendig hergestellten Glassubstrate führen kann.

Der Erfindung liegt mithin die Aufgabe zugrunde, eine Festigkeitsminderung durch Markierungen, die mit einem materialabtragenden Verfahren in ein Glas eingefügt werden, möglichst gering zu halten. Eine weitere Aufgabe besteht darin, neben dem Anheben einer reduzierten Festigkeit eines Glaselements auf ein adäquates und anwendungsorientiertes Level die maschinelle Lesbarkeit der Markierung, wie etwa einem QR-Code nicht wesentlich zu verschlechtern.

Diese Aufgabe wird durch den Gegenstand der unabhängigen Ansprüche gelöst. Vorteilhafte Ausgestaltungen der Erfindung sind in den jeweiligen abhängigen Ansprüchen angegeben.

Demgemäß sieht die Erfindung ein Glaselement mit einer Oberflächenstrukturierung vor, welche zumindest einen strukturierten Bereich der Glasoberfläche umfasst, welcher durch Glasabtrag eine höhere Rauigkeit aufweist, als ein angrenzender, unstrukturierter Bereich der Glasoberfläche, wobei der strukturierte Bereich ein insbesondere mittels Spannungsdoppelbrechung messbares mechanisches Spannungsprofil aufweist, welches folgende Eigenschaften aufweist:
- der strukturierte Bereich weist an der Glasoberfläche eine Druckspannung auf, die betragsmäßig höher ist, als die Spannung im angrenzenden unstrukturierten Bereich,
- die Druckspannung wird betragsmäßig mit wachsender Tiefe kleiner und geht in eine Zugspannung über, wobei die maximale Zugspannung betragsmäßig kleiner ist, als die Druckspannung an der Glasoberfläche.

Der strukturierte Bereich der Glasoberfläche kann dabei insbesondere eine ablativ strukturierte Oberfläche, beziehungsweise eine durch Glasabtrag mittels Laserablation erzeugte Struktur aufweisen.

Ein Spannungsprofil mit den oben genannten Eigenschaften führt zu einer deutlich verbesserten Bruchfestigkeit des Glaselements im Bereich des strukturierten Bereichs im Vergleich zu einem Glaselement ohne ein solches oder mit einem anderen Spannungsprofil, wobei die Bruchfestigkeit jedoch immer noch geringer sein kann, als an einem unstrukturierten Bereich. Überraschend kann also die Bruchfestigkeit verbessert werden, obwohl Spannungen in das Glas eingebracht werden.

Besonders geeignet für das Einbringen eines Spannungsprofils gemäß dieser Offenbarung sind Gläser mit bestimmten thermischen Eigenschaften. Insbesondere kann die Transformationstemperatur in Kombination mit dem thermischen Ausdehnungskoeffizienten die durch die Ablation in das Element eingebrachte Spannung beeinflussen. Ohne Beschränkung auf bestimmte Gläser ist es günstig, wenn der mittlere thermische Längenausdehnungskoeffizient α_{(20-300 °C)} des Glases des Glaselements im Bereich von 20 °C bis 300 °C kleiner als 9.10⁻⁶ K⁻¹ vorzugsweise kleiner als 6.10⁻⁶ K⁻¹ ist Weiter bevorzugt ist ein Längenausdehnungskoeffizient α_{(20-300 °C)} von kleiner als 5 ·10⁻⁶ K⁻¹ oder sogar von kleiner als 4 ·10⁻⁶ K⁻¹. Eine weitere günstige Eigenschaft des Glases zur Vermeidung des Einfrierens hoher Spannungen bei der Laserablation ist eine niedrige Glasübergangstemperatur. Allgemein wird bevorzugt, wenn das Glas des Glaselements eine Glasübergangstemperatur von kleiner als 600 °C, vorzugsweise von kleiner als 570 °C aufweist.Die Erfindung wird nachfolgend genauer anhand der Figuren beschrieben. Dabei verweisen gleiche Bezugszeichen jeweils auf gleiche oder entsprechende Elemente.

### Kurzbeschreibung der Figuren

Fig. 1 zeigt ein Glaselement mit einer Lasermarkierung.
Fig. 2 und Fig. 3 zeigen mikroskopische Aufnahmen einer Markierung auf einem Glaselement.
Fig. 4 zeigt eine Testvorrichtung für die Messung der Bruchfestigkeit von Glaselementen.
Fig. 5 zeigt ein Diagramm mit Messwerten der Bruchfestigkeit für verschiedene Glaselemente.
Fig. 6 zeigt Messwerte des Zell-Kontrasts für verschiedene laserbearbeitete Muster.
Fig. 7 bis Fig. 10 zeigen Diagramme der mechanischen Spannungen in Glaselementen in Abhängigkeit des Abstands zur Glasoberfläche.
Fig. 11 zeigt ein Glaselement mit einem herausgetrennten Probenstreifen.

### Detaillierte Beschreibung der Figuren

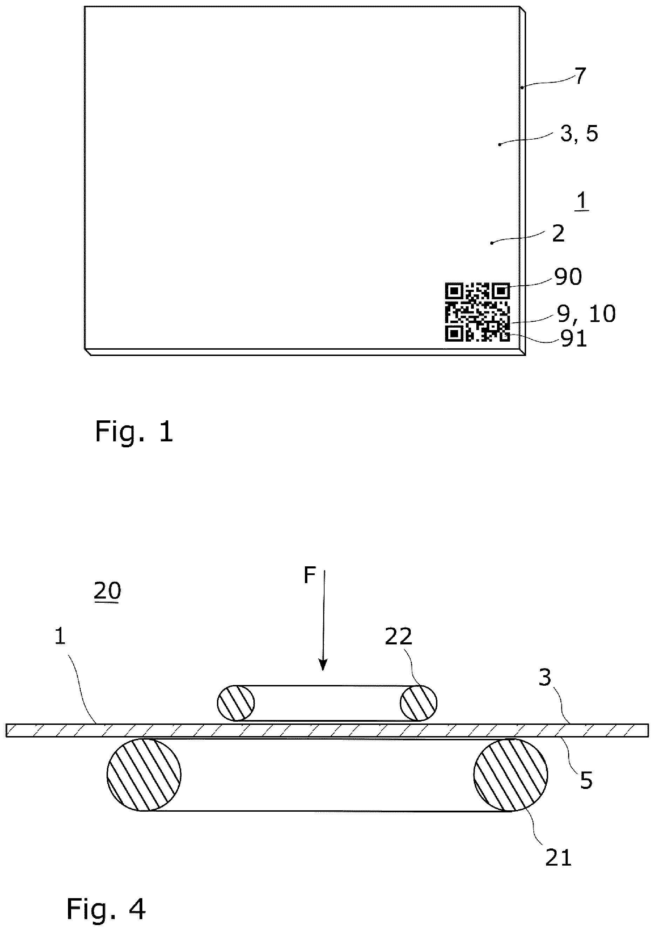

Fig. 1 zeigt in perspektivischer Darstellung ein Glaselement 1 gemäß dieser Offenbarung. Das Glaselement 1 kann wie dargestellt scheibenförmig sein und weist dann demgemäß zwei gegenüberliegende Seitenflächen 3, 5, sowie eine Kantenfläche 7 auf. Die äußere Umrandung des Glaselements 1 wird durch die Kantenfläche 7 gebildet. Auf der Oberfläche des Glaselements 1 ist weiterhin eine Markierung 9 aufgebracht, die gemäß einer Ausführungsform, wie auch im dargestellten Beispiel die Form eines Matrixcodes 10 hat. Die einzelnen Codeelemente des Matrixcodes sind als schwarze und weiße Felder dargestellt. Dabei können die schwarzen Felder strukturierte Bereiche 90 und die weißen Felder unstrukturierte Bereiche darstellen. Aufgrund der höheren Rauigkeit der strukturierten Bereiche 90 im Vergleich zu den unstrukturierten Bereichen 91 sind diese voneinander optisch unterscheidbar, so dass eine optische Erkennungseinrichtung den Matrixcode 10 auslesen kann.

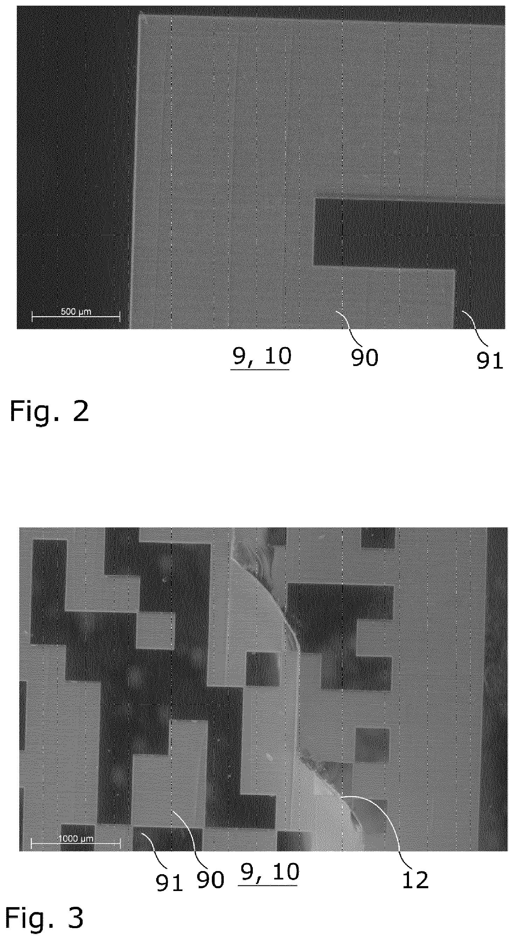

Die Oberflächenstrukturierung 9 ist genauer anhand der Fig. 2 und Fig. 3 dargestellt. Die beiden Figuren zeigen lichtmikroskopische Aufnahmen von Ausschnitten einer Oberflächenstrukturierung 9 in Gestalt eines Matrixcodes in unterschiedlicher Vergrößerung. Die Oberflächenstrukturierung 9 wurde durch Ablation mit einem Ultrakurzpulslaser hergestellt. Wie anhand der beiden Bilder zu erkennen ist, untergliedert sich die Markierung 9 in strukturierte Bereiche 90 und unstrukturierte Bereiche 91. Die durch Laserablation erzeugten strukturierten Bereiche 90 erscheinen in den Bildern heller als die unstrukturierten Bereiche 91. Dies wird durch die erhöhte Rauigkeit in den strukturierten Bereichen 90 und die damit einhergehende Lichtstreuung verursacht. Um die Festigkeit des Glaselements 1 zu untersuchen, wurde das Glaselement 1 einem Bruchtest unterzogen. Dabei wird das Glaselement 1 einer Biegespannung ausgesetzt, bis dieses bricht. Der dabei entstandene Riss ist in der Aufnahme der Fig. 3 gut zu erkennen.

Fig. 4 zeigt eine Testvorrichtung 20 für die Messung der Bruchfestigkeit von Glaselementen 1 mittels eines Ring-on-Ring-Tests. Die Testvorrichtung 20 umfasst einen ersten Ring 21, auf den das zu testende Glaselement 1 aufgelegt wird, sowie einen kleineren, zweiten Ring 22. Der zweite Ring 22 wird konzentrisch zum ersten Ring 21 angeordnet und die beiden Ringe durch eine mit einem Pfeil symbolisierte Kraft F aufeinandergepresst, so dass auf das zwischen den Ringen 21, 22 angeordnete Glaselement 1 eine Biegespannung ausgeübt wird. Die Kraft F wird so lange erhöht, bis das Glaselement 1 reißt. Die Kraft, bei der dies erfolgt, beziehungsweise die daraus berechnete Biegespannung wird aufgezeichnet.

Es zeigt sich dabei, dass gemäß dieser Offenbarung oberflächlich strukturierte Glaselemente 1 in den strukturierten Bereichen eine deutliche höhere Festigkeit aufweisen, als Glaselemente, die in üblicher Weise mittels Laserablation strukturiert wurden.

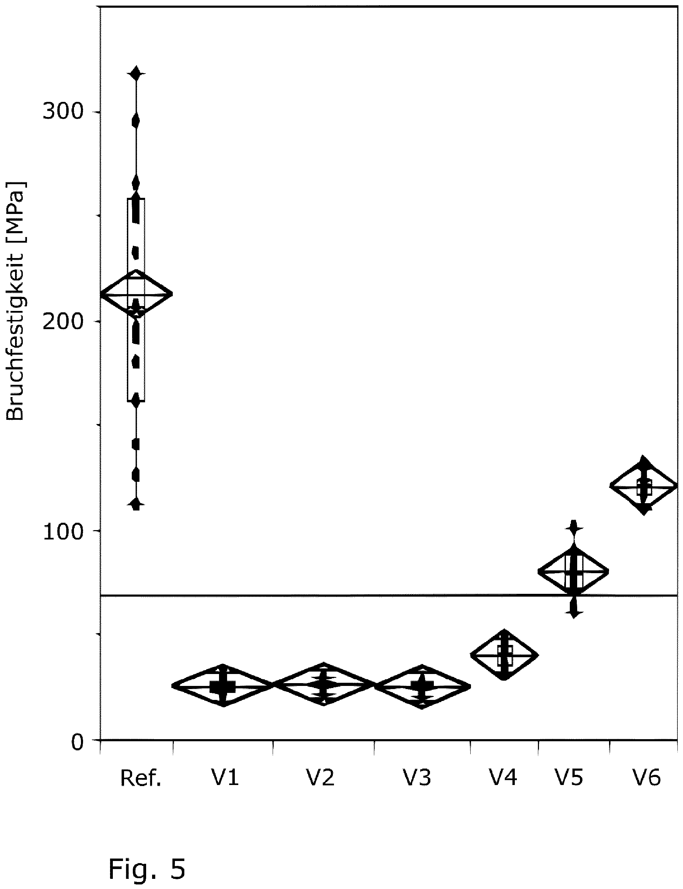

Fig. 5 zeigt ein Diagramm mit Messwerten der Bruchfestigkeit für verschiedene plattenförmige Glaselemente. Die Mittelwerte der Bruchfestigkeit sind als Querbalken in den Rauten dargestellt. Die mit als "Ref." bezeichneten Messwerte wurden an Proben ohne Strukturierung gemessen. Die Proben "V1", "V2" und "V3" sind Proben, die in üblicher Weise durch Laserablation strukturiert wurden. Die Messwerte "V4", "V5" und "V6" wurden an Proben gemessen, welche in den strukturierten Bereichen das Spannungsprofil gemäß dieser Offenbarung aufweisen, bei denen also die strukturierten Bereiche der Matrixcodes an der Glasoberfläche 2 eine Druckspannung aufweisen, die betragsmäßig höher ist, als die Spannung in angrenzenden unstrukturierten Bereichen 91, wobei die Druckspannung mit wachsender Tiefe absinkt und in eine Zugspannung übergeht, wobei die maximale Zugspannung betragsmäßig kleiner ist, als die Druckspannung an der Glasoberfläche 2. Für die Messungen wurden Proben aus Borosilikatglas, speziell aus einem unter dem Handelsnamen BOROFLOAT^{®} 33 erhältlichen, im Folgenden auch als "Glas 1" bezeichneten Glas mit einem thermischen Ausdehnungskoeffizienten von 3,25·10⁻⁶ K⁻¹ verwendet. Dieses Glas ist ein Beispiel einer Klasse von Borosilikatgläsern mit thermischem Ausdehnungskoeffizienten kleiner als 3,9·10⁻⁶ K-1 gemäß einer Ausführungsform von bearbeiteten Glaselementen, beziehungsweise von geeigneten Gläsern nach dieser Offenbarung. Ohne Beschränkung auf die hier diskutierten Beispiele sind Glaselemente aus Borosilikatglas besonders bevorzugt, da mit diesen Gläsern die gewünschten Spannungsprofile leicht durch geeignete Verfahrensparameter bei der Laserablation einstellen lassen. Die Probenserien "V4" bis "V6" unterscheiden sich jeweils hinsichtlich der Parameter bei der Laserablation.

Wie anhand des Diagramms zu erkennen ist, ist die Bruchfestigkeit der in üblicher Weise strukturierten Proben gegenüber einer unbehandelten Glasplatte deutlich reduziert. Im Speziellen zeigt sich, dass die Festigkeit der herkömmlich strukturierten Proben um etwa 80% gegenüber der unstrukturierten Referenzprobe reduziert ist. Unter einer herkömmlich strukturierten Probe wird dabei eine Probe verstanden, bei welcher der Laserstrahl den zu strukturierenden Bereichs nacheinander in direkt nebeneinanderliegenden Bahnen abrastert. Wie ebenfalls erkennbar, ist für alle gemäß dieser Offenbarung strukturierte Proben demgegenüber eine deutliche Festigkeitszunahme zu verzeichnen. Bei der mit "V6" bezeichneten Probe ist die Festigkeit im strukturierten Bereich 90 bereits mit der Festigkeit einer unstrukturierten Probe vergleichbar und um einen Faktor 5 fester, als die herkömmlich strukturierten Proben der Serien "V1", "V2" und "V3".

Die statistischen Werte der Bruchfestigkeit in MPa der Beispiele "Ref.", "V1", "V4", "V5" und "V6" sind in der nachfolgenden Tabelle 1 angegeben.

**Tabelle 1:**

| **Serie** | Ref. | V1 | V4 | V5 | V6 |
|---|---|---|---|---|---|
| **Min** | 112,1 | 21,1 | 32,1 | 61,3 | 109,9 |
| **Q25** | 170,7 | 24,4 | 35,8 | 73,0 | 117,3 |
| **MW** | 212,3 | 25,6 | 40,1 | 79,9 | 121,0 |
| **Median** | 206,8 | 25,6 | 40,7 | 79,7 | 121,3 |
| **Q75** | 256,0 | 26,4 | 44,4 | 88,8 | 123,2 |
| **Max** | 317,5 | 32,0 | 47,9 | 101,2 | 132,0 |

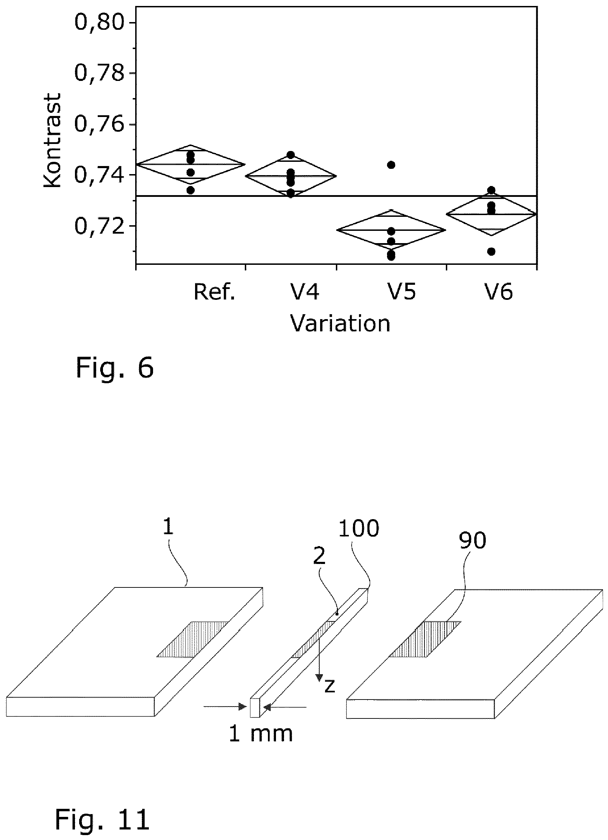

In Fig. 6 werden einfaktorielle Analysen des Zellkontrasts von Matrix-Codes dargestellt. Die Analysen wurden für vier verschiedene Muster durchgeführt. Die mit "Ref." bezeichnete Probe ist eine in üblicher Weise strukturierte Probe entsprechend den Proben "V1", "V2", V3" aus Fig. 5. Wie anhand von Fig. 6 ersichtlich, ist der Kontrast entsprechend dem Parameter "Cell contrast" der AIM DPM-1-2006 für die gemäß dieser Offenbarung strukturierten Proben vergleichbar und oberhalb eines Wertes von 0,7. Der Kontrast kann gemäß ISO I/IEC TR 29158 oder AIM DPM-1-2006 mit Aufnahme unter diffuser Beleuchtung, zum Beispiel mittels einer 90°-Dom-Beleuchtung oder mittels aus vier Richtungen unter jeweils einem Einstrahlwinkel von 45° auf das Glaselement einstrahlenden Lichtquellen aufgenommen werden. Wie zu erkennen, beträgt der Zellkontrast bei allen Beispielen mindestens 0,72. Ohne Beschränkung auf die speziellen Beispiele ist dazu in einer Weiterbildung vorgesehen, dass der zumindest eine strukturierte Bereich 90 Bestandteil einer optisch erfassbaren Markierung 9, insbesondere eines Matrixcodes 10 ist, wobei die Markierung 9 einen Zellkontrast von mindestens 0,7 aufweist.

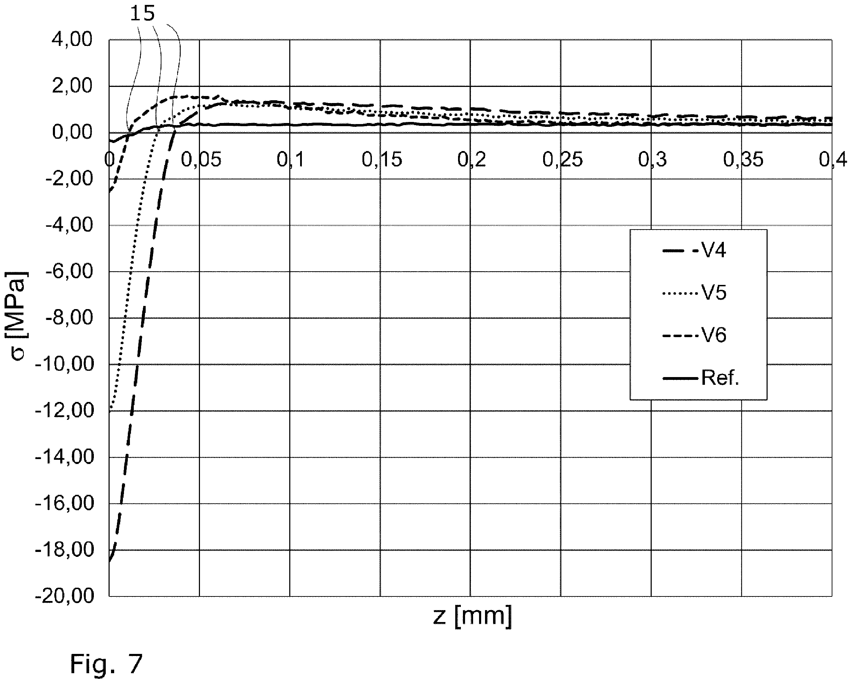

Fig. 7 zeigt Diagramme der mechanischen Spannungen im Glaselement 1 in Abhängigkeit der Tiefe, beziehungsweise des Abstands z zur Glasoberfläche. Die Messungen wurden an den drei gemäß dieser Offenbarung strukturierten Proben "V4", "V5" und "V6" durchgeführt, für die auch in den Fig. 5 und Fig. 6 die mittleren Bruchfestigkeiten und der Zellkontrast gezeigt sind. Im Vergleich ist der mit "Ref." bezeichnete Spannungsverlauf einer unstrukturierten Referenzprobe gezeigt. Für die Messungen wurde wie in Fig. 11 gezeigt aus den Glaselementen ein 1 mm breiter Probenstreifen herauspräpariert (Länge ca. 25 mm), welcher mittig durch den QR-Matrixcode, beziehungsweise einen strukturierten Bereich 90 verläuft. Die Schnittflächen wurden poliert und die Spannungsdoppelbrechung bis zu einem Abstand von 1,4 mm zur Glasoberfläche 2 in z-Richtung, senkrecht zu den Schnittflächen, gemessen. Für die Messung wurde als Messgerät ein Hinds Instruments Exicor Microimager verwendet.

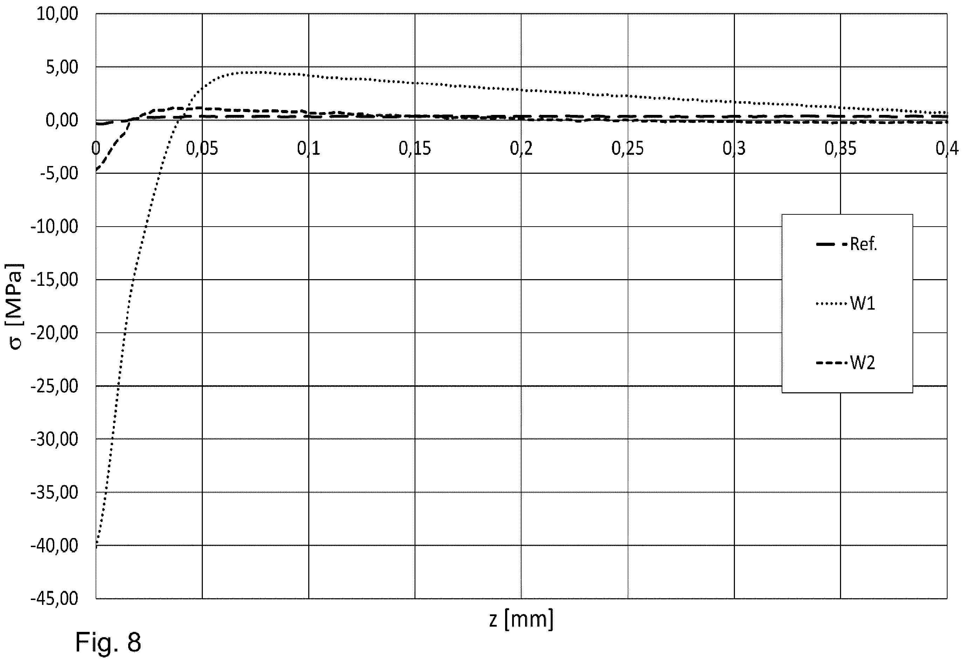

Die gemessenen Werte d der Spannungsdoppelbrechung wurden in Spannungen mittels der Beziehung d = 1 mm / SOK umgerechnet. Als spannungsoptische Koeffizienten SOK der untersuchten Gläser wurde für Glas 1 ein Wert von 4,01·1/Tpa zugrunde gelegt. Für die weiter unten anhand der Fig. 8 bis Fig. 10 beschriebenen Ausführungsbeispiele der Gläser "Glas 2", "Glas 3" und "Glas 4" wurden weiterhin folgende spannungsoptische Koeffizienten verwendet: für Glas 2 ein Wert von 3,60·1/TPa, für Glas 3 ein Wert von 3,10·1/TPa und für Glas 4 ein Wert von 2,79·1/TPa. Es wurde jeweils an vier zufällig ausgewählten Positionen gemessen. Zusätzlich wurde pro Probenstreifen 100 eine Position außerhalb des strukturierten Bereichs 100 gemessen. In den Messergebnissen beginnt das Glas bei z = 0. Der QR-Matrixcode, beziehungsweise der strukturierte Bereich liegt bei z < 0, da durch die Ablation Material an der Oberfläche entfernt wurde.

Zugspannungen sind in den Messergebnissen der Fig. 7 immer positiv, Druckspannungen sind negativ eingezeichnet. Die Referenzprobe weist keine signifikanten Spannungen an der Oberfläche und in den oberflächennahen Bereichen auf. Für die gemäß dieser Offenbarung strukturierten Proben ergibt sich demgegenüber ein charakteristischer Spannungsverlauf, bei welchem an der Glasoberfläche 2 eine Druckspannung vorhanden ist, die absinkt und in größerer Tiefe in eine Zugspannung übergeht. In allen Fällen ist die Zugspannung betragsmäßig kleiner als die maximale Druckspannung an der Glasoberfläche 2.

Wie anhand des Diagramms ersichtlich, ist es für die Festigkeit gut, wenn der Übergangspunkt 15 zwischen Druck- und Zugspannung möglichst nahe an der Glasoberfläche 2 liegt. Ein weiteres Kriterium ist eine niedrige maximale Druckspannung an der Glasoberfläche 2. So steigt die Bruchfestigkeit von Probe "V4" über Probe "V5" zu Probe "V6" an, wobei der Übergangspunkt sich gleichzeitig der Glasoberfläche nähert und die maximale Druckspannung absinkt. Ohne Beschränkung auf die dargestellten Beispiele ist es daher günstig, wenn im strukturierten Bereich 90 das Produkt aus der Tiefe z des Übergangspunkts, bei der die Druckspannung in eine Zugspannung übergeht, mit der maximalen Druckspannung, also typischerweise der Druckspannung an der Glasoberfläche einen betragsmäßigen Wert von kleiner als 0,05mm×20 MPa, vorzugsweise von kleiner als 0,05mm×20 MPa, also von kleiner 2,25 MPa·mm, vorzugsweise kleiner 1 MPa·mm aufweist. Bevorzugt ist es, wenn das Produkt einen Wert von höchstens 0,1 MPa·mm hat. Bei der Probe "V6" mit der höchsten Festigkeit weist das Produkt aus der Tiefe z des Übergangspunkts 15 und der maximalen Druckspannung einen Wert von nur 0,025 MPa·mm auf. Die Parameter Tiefe des Übergangspunkts und maximale betragsmäßige Druckspannung sind auch für sich genommen wesentlich für die Bruchfestigkeit des Glaselements 1 an einem strukturierten Bereich. So ist gemäß einer alternativen oder zusätzlichen Ausführungsform vorgesehen, dass der Übergangspunkt 15 zwischen Druck- und Zugspannung im strukturierten Bereich 90 in einer Tiefe von höchstens 0,05 mm liegt. Schließlich ist es günstig, wenn die maximale Druckspannung im strukturierten Bereich 90, insbesondere die Druckspannung an der Glasoberfläche 2 betragsmäßig höchstens 20 MPa beträgt.

Das Spannungsprofil und die damit erhaltene Festigkeit eines Glaselements 1 im Bereich einer Markierung ist auch deshalb besonders von Vorteil, weil ein Annealling, also eine Entspannung mittels einer nachträglichen Temperaturbehandlung, beispielsweise bis zu einer Temperatur knapp unter T_{g} entfallen kann. Auch tritt bei flachen Glaselementen 1 ein geringerer Warp auf.

Nachfolgend werden die verwendeten Verfahrensparameter zur Herstellung von strukturierten Glaselementen 1 gemäß den oben beschriebenen Beispielen "V1" bis "V6" beschrieben. Als Proben dienten für die Beispiele "V1" bis "V6" jeweils Glaselemente 1 aus Borosilikatglas des Typs BOROFLOAT^{®} 33. Außerdem wurden Proben von als "Glas 2", "Glas 3" und "Glas 4" bezeichneten Gläsern mit den oben angegebenen spannungsoptischen Koeffizienten untersucht. Dabei waren die Proben "W1" und "W2" Glaselemente aus Glas 2, die Proben "W3" und "W4" aus Glas 3 und die Proben "W5" und "W6" aus Glas 4. Glas 2 ist ein Beispiel einer Ausführungsform in Form eines Borosilikatglases mit einem linearen thermischen Ausdehnungskoeffizienten α₍₂₀₋₃₀₀ °C) im Bereich von 3,9·10⁻⁶K⁻¹ bis 6·10⁻⁶K⁻¹. Glas 3 ist ein Glas aus einer Klasse von Borosilikatgläsern mit einem linearen thermischen Ausdehnungskoeffizienten α₍₂₀₋₃₀₀ °C) im Bereich von > 6·10⁻⁶K⁻¹ bis 9·10⁻⁶K⁻¹ gemäß einer weiteren Ausführungsform geeigneter Gläser. Glas 4 schließlich ist ein Glas aus der Gruppe der Lithium-Aluminosilikatgläser (LAS-Glas), insbesondere ein Beispiel eines Lithium-Alumino-Borosilikatglases (LABS-Glas) als Unterklasse von LAS-Gläsern. Diese Gläser zeichnen sich unter anderem durch hohe Festigkeiten aus. Neben Borosilikatgläsern sind auch Lithium-Aluminosilikatgläser und insbesondere Lithium-Alumino-Borosilikatgläser bevorzugte Gläser zur Bearbeitung mit dem Verfahren gemäß dieser Offenbarung. Einige Eigenschaften der Gläser Glas 1 bis Glas 4 sind weiter unten in Tabelle 3 angegeben.. Die Glaselemente 1 weisen eine Abmessung von 100 × 100 mm bei einer Glasdicke von 1,8 mm auf. In der Mitte der Glaselemente zentriert wurde jeweils ein Matrixcode 10, speziell ein Datamatrixcode mit einer Abmessung von 10 × 10 mm mittels eines Lasers eingefügt. Die Laserquelle erzeugt in einer bevorzugten Ausführungsform und allgemein, ohne Beschränkung auf bestimmte Beispiele Laserpulse mit einer Wellenlänge von zumindest 900 nm, vorzugsweise im Bereich von 900 nm bis 3 µm, bevorzugt im Bereich von 1000-1100 nm. In den nachfolgend beschriebenen Beispielen wurde ein Laser mit einer Wellenlänge von 1030 nm verwendet. Die Pulsdauer beträgt allgemein bevorzugt weniger als 1 Nanosekunde. Vorzugsweise liegt diese im Bereich von 100 fs bis 10 ps, im Speziellen bei ca. 1 ps). Es wurde ein Spot-Durchmesser des Laserstrahls auf der Glasoberfläche von ungefähr d = 15 µm erreicht, wobei die Pulsenergie max. dem Dreifachen der Ablationsschwelle, typisch 2fach, entsprechen kann.

Die Laserparameter sind genauer in der nachfolgenden Tabelle 2 aufgeführt.

**Tabelle 2:**

| Probe | f [kHz] | k1 Pulsdichte/Überfahrt [µm⁻¹] | Zeitlich er Pulsteil er | Überfahrten (N) | Linienabstand [µm] | Pulsdichte (k) [µm⁻¹] | DMC-Inhalt |
|---|---|---|---|---|---|---|---|
| V1 | 1000 | 10 | 1 | 1 | 1.3*d | 10 | GS3H1111 |
| V2 | 1000 | 10 | 1 | 1 | d | 10 | GS3H1111 |
| V3 | 1000 | 10 | 1 | 1 | 0.5*d | 10 | GS3H1111 |
| V4 | 1000 | 5 | 2 | 1 | 0.7*d | 5 | GS3H1121 |
| V5 | 1000 | 2,5 | 4 | 2 | 0.7*d | 5 | GS3H1142 |
| V6 | 1000 | 1,25 | 8 | 4 | 0.7*d | 5 | GS3H1184 |
| W1 | 1000 | 10 | 1 | 1 | 0.7*d | 10 | GS3H1111 |
| W2 | 1000 | 1,25 | 8 | 4 | 0.7*d | 5 | GS3H1184 |
| W3 | 1000 | 10 | 1 | 1 | 0.7*d | 10 | GS3H1111 |
| W4 | 1000 | 1,25 | 8 | 4 | 0.7*d | 5 | GS3H1184 |
| W5 | 1000 | 10 | 1 | 1 | 0.7*d | 10 | GS3H1111 |
| W6 | 1000 | 2,5 | 4 | 4 | 0.7*d | 10 | GS3H1144 |

Der zeitliche Pulsteiler gibt an, wie viele der durch die Pulsfrequenz f gegebenen Pulse tatsächlich abgegeben werden. Bei den Proben "V4", "V5" und "V6", die gemäß dem hier beschriebenen Verfahren strukturiert wurden, ist dabei ein Pulsteiler von mindestens zwei vorgesehen, so dass eine geringere Pulsdichte, beziehungsweise eine geringere Dichte von Ablationspunkten entlang einer überfahrenen Linie vorhanden ist. Die Pulsdichte pro Überfahrt wird mit k1 beschrieben und gibt die Anzahl der Pulse je Mikrometer Pfadlänge an. Die Gesamtpulsdichte k ergibt sich aus N*k1, wobei N die Anzahl der Überfahrten ist.

Verschiedene Eigenschaften der untersuchten Gläser sind in nachstehender Tabelle 3 aufgeführt.

**Tabelle 3:**

| Glas | | Glas 1 | Glas 2 | Glas3 | Glas 4 |
|---|---|---|---|---|---|
| CTE | ppm/K | 3,25 | 4,15 | 7,20 | 5,31 |
| T_{g} | °C | 530 | 589 | 557 | 577 |
| E-Modul | Gpa | 63 | 69 | 73 | 81 |
| µ | | 0,2 | 0,194 | 0,21 | 0,26 |
| Thermische Leitfähigkeit | W/K/m (100°C) | 1,2 | 1,2 | | |

Allgemein, ohne Beschränkung auf die in den obigen Tabellen 2 und 3 aufgeführten Beispiele ist dazu ein Verfahren zur Herstellung eines Glaselements 1 mit einer Oberflächenstrukturierung 9 vorgesehen, welche zumindest einen strukturierten Bereich 90 der Glasoberfläche 2 umfasst, welcher eine höhere Rauigkeit aufweist, als ein angrenzender, unstrukturierter Bereich 91 der Glasoberfläche 2, wobei der zumindest eine strukturierte Bereich 90 hergestellt wird, indem ein gepulster Laserstrahl auf die Glasoberfläche 2 gerichtet wird, dessen Laserpulse durch Ablation Glas von der Glasoberfläche 2 entfernen, und wobei die Ablationspunkte so nebeneinander eingefügt werden, dass
- der strukturierte Bereich 90 an der Glasoberfläche (2) eine Druckspannung aufweist, die betragsmäßig höher ist, als die Spannung in einem angrenzenden unstrukturierten Bereich 91, und dass
- die Druckspannung betragsmäßig mit wachsender Tiefe kleiner wird und in eine Zugspannung übergeht, wobei die maximale Zugspannung betragsmäßig kleiner ist als die Druckspannung an der Glasoberfläche 2.

Insbesondere kann der Laserstrahl das Gebiet mit dem herzustellenden strukturierten Bereich 90 mehrfach in nebeneinanderliegenden Pfaden überqueren, um entlang dieser Pfade Glas durch Ablation zu entfernen, wobei die Pulsfrequenz des Laserstrahls und die Geschwindigkeit, mit welcher der Laserstrahl über die Glasoberfläche 2 geführt wird, so eingestellt werden, dass entlang eines Pfades das Gebiet mit einer Pulsdichte von k1 ≤ 5 Pulsen pro Mikrometer, vorzugsweise k1 ≤ 2,5 Pulsen pro Mikrometer Pfadlänge bearbeitet wird, beziehungsweise dass die Pulsdichte während einer Überfahrt über das Gebiet höchstens 5, vorzugsweise höchstens 2,5 Pulse pro Mikrometer beträgt. Besonders bevorzugt ist eine Pulsdichte von höchstens 1,25 pro Mikrometer. Die Gesamt-Pulsdichte kann aber dennoch wesentlich höher sein, indem etwa das Gebiet wie etwa in den Beispielen V5 und V6 mehrfach überfahren, beziehungsweise abgescannt wird. Unter einem mehrfach Überfahren wird ein Abrastern des Gebiets verstanden, welches mindestens einmal wiederholt wird. Bei den in der Tabelle angegebenen Beispielen "V4", "V5" und "V6" wurden jeweils nur fünf Laserpulse an einem Ort abgegeben. Im Vergleich zu den Vergleichsbeispielen "V1" und "V2" ist dafür mit 0.7*d der Abstand nebeneinanderliegender Pfade niedriger. Ohne Beschränkung auf die dargestellten Beispiele ist dazu in einer Weiterbildung des Verfahrens vorgesehen, dass das Gebiet mit dem herzustellenden strukturierten Bereich 90 vom Laserstrahl in nebeneinanderliegenden Pfaden so überfahren wird, dass die Pfade einen Abstand von höchstens oder kleiner d aufweisen. Alternativ oder zusätzlich kann vorgesehen werden, dass der Abstand höchstens 12 µm beträgt. Demgemäß sind in Weiterbildung des Verfahrens zwei Ausführungsformen vorgesehen, gemäß denen
- das Gebiet mit dem herzustellenden strukturierten Bereich 90 vom Laserstrahl in nebeneinanderliegenden Pfaden so überfahren wird, dass die Pfade einen Abstand von höchstens 12 Mikrometern aufweisen, und/oder wobei
- das Gebiet mit dem herzustellenden strukturierten Bereich 90 vom Laserstrahl in nebeneinanderliegenden Pfaden so überfahren wird, dass die Pfade einen Abstand aufweisen, der höchstens so groß ist, wie der Durchmesser des Laserstrahls auf der Glasoberfläche. Wichtig für das Spannungsprofil innerhalb des strukturierten Bereichs 90 ist auch der zeitliche Abstand aufeinanderfolgender Laserpulse, die nebeneinanderliegende Ablationspunkte entlang eines Pfads erzeugen. Gemäß einer Ausführungsform des Verfahrens beträgt der zeitliche Abstand aufeinanderfolgender Laserpunkte mindestens 1,5 Mikrosekunden. Aus einem Vergleich der Verfahrensparameter gemäß der Tabelle mit den Festigkeiten gemäß Fig. 5 wird auch ersichtlich, dass besonders hohe Festigkeiten erreicht werden können, indem k1 niedrig gehalten wird.

Für einen gleichbleibenden Kontrast des Matrixcodes kann der herzustellende strukturierte Bereich 90 vom Laserstrahl mehrfach, also mindestens zweifach in übereinanderliegenden Pfaden überfahren werden, so dass die Gesamtpulsdichte k "gleich bleibt," bzw. möglichst hoch ist. Die Pfade der Überfahrten können dabei auch quer zueinander, insbesondere senkrecht zueinander liegen. So kann in einer ersten Überfahrt das Gebiet mit dem zu strukturierenden Bereich 90 mit einer Schar paralleler Pfade und in einer weiteren Überfahrt mit einer weiteren Schar paralleler, aber zu den Pfaden der ersten Überfahrt quer, insbesondere senkrecht liegenden Pfaden überfahren werden.

Die Fig. 8 bis Fig. 10 zeigen analog zu Fig. 7 den Verlauf der Spannungen an Glaselementen 1 anhand von Messungen der Spannungsdoppelbrechung für weitere Glastypen. Die mit "Ref." bezeichnete Kurve ist jeweils der bereits in Fig. 7 gezeigte Verlauf der Spannung an einer Referenzprobe aus dem Borosilikatglas Glas 1. Fig. 8 zeigt dabei die Verläufe an den Proben W1 und W2 aus dem Borosilikatglas Glas 2 gemäß der obigen Tabelle. Dabei zeigt die Probe W2 gegenüber der Probe W1 deutlich geringere Spannungen an der strukturierten Glasoberfläche. Wie auch bei Glas 1 ergibt sich diese Reduktion durch die geringere Pulsdichte pro Überfahrt, was bei Probe W2 durch einen zeitlichen Pulsteiler von 8, beziehungsweise eine achtfach reduzierte Pulsfrequenz und eine um einen Faktor 2 reduzierte Pulsdichte erreicht wird (siehe Tabelle 2).

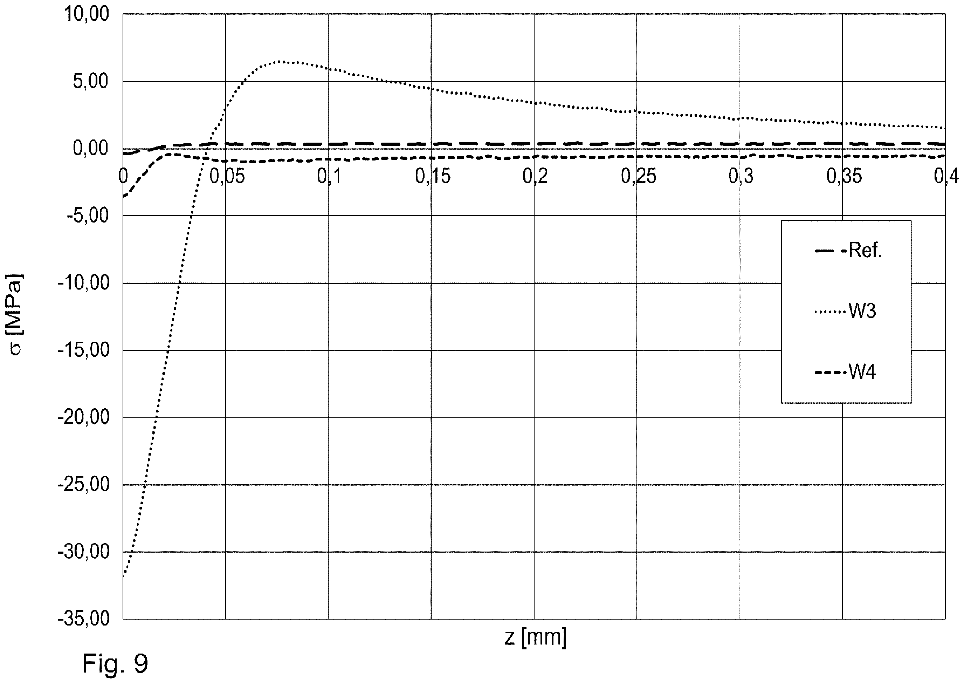

Fig. 9 zeigt entsprechende Messwerte an Glas 3, ebenfalls einem Borosilikatglas, jedoch mit höherem thermischen Ausdehnungskoeffizienten. Die Probe W4 wurde analog zur Probe W2 mit einer gegenüber Probe W3 um einen Faktor 8 reduzierten Pulsfrequenz und einer um einen Faktor zwei reduzierten Pulsdichte bearbeitet. Wie auch bei den anderen Gläsern führt die geringe Pulsdichte von weniger als acht Laserpulsen pro Mikrometer Weglänge zu einer betragsmäßig deutlich geringeren Spannung an der strukturierten Glasoberfläche, die in Richtung zu höheren Tiefen betragsmäßig weiter abnimmt. Im Unterschied zu den anderen Beispielen geht die Druckspannung aber nicht in eine Zugspannung über, sondern nähert sich der Nulllinie, beziehungsweise einem spannungslosen Zustand ab. Die Spannung zeigt sogar ein Zwischen-Minimum bei einer Tiefe von etwa 0,02 Millimetern.

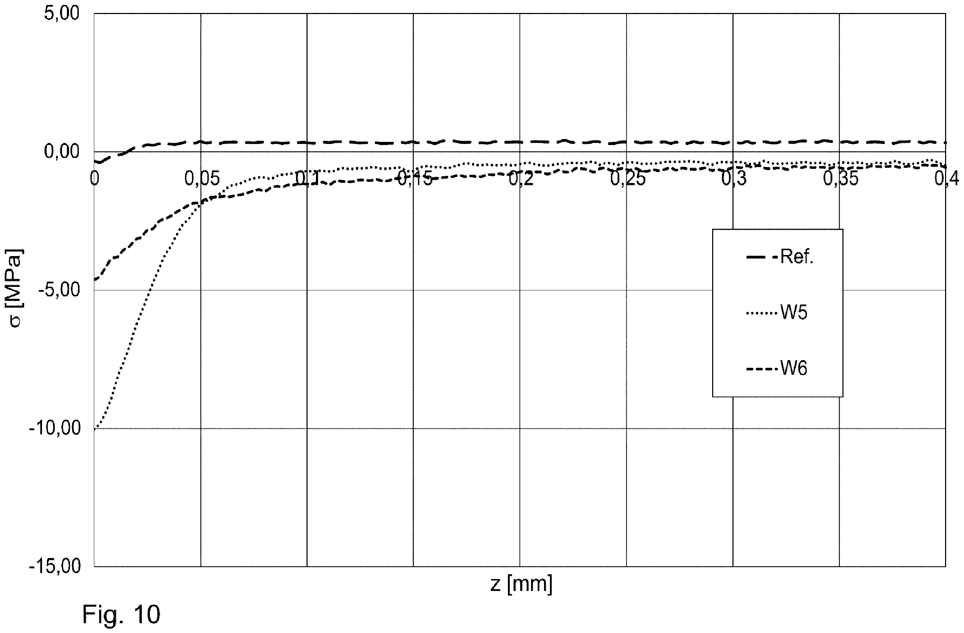

Entsprechende Messungen an Proben von Glaselementen 1 des Glastyps Glas 4, ein Lithium-Alumino-Borosilikatglas, zeigt Fig. 10. Anders als in den Beispielen der Fig. 8 und Fig. 9 wurde bei der Probe W6 die Pulsfrequenz gegenüber der Probe W5 nur um einen Faktor 4 reduziert, und die Anzahl der Überfahrten von 1 auf 4 erhöht. Die räumliche Pulsdichte, beziehungsweise die Anzahl der Pulse pro µm bleibt damit gegenüber der Probe W5 gleich. Auch hier ergibt sich durch die geringere Pulsfrequenz und mehrfache Überfahrt ein größerer örtlicher Abstand zeitlich aufeinanderfolgender Ablationen auf der Oberfläche. Auch bei diesem weiteren Glastyp zeigt sich durch die Verringerung der Pulsfrequenz bei der Probe W6 gegenüber Probe W5 eine betragsmäßig geringere Spannung, insbesondere eine betragsmäßig geringere Druckspannung an der Glasoberfläche im bearbeiteten Bereich. Allerdings geht ähnlich wie im Beispiel der Fig. 9 die Druckspannung mit wachsender Tiefe nicht in eine Zugspannung über, sondern nähert sich einem spannungsfreien Zustand an. Im Beispiel der Fig. 10 gilt dies auch für die mit höherer Pulsdichte bearbeitete Probe W5.

Denn nach dem hier beschriebenen Verfahren behandelten Glaselementen der Proben W2, W4 und W6, sowie auch V6, bei welchem die Ablation mit weniger als acht Pulsen pro Mikrometer Weglänge erfolgt, ist gemeinsam, dass die Druckspannung an der mit Ablation bearbeiteten Glasoberfläche kleiner ist als -5 MPa, wobei die Druckspannung mit steigender Tiefe im Glas abnimmt, sei es, weil sie in eine Zugspannung übergeht, oder, weil sie sich betragsmäßig einem spannungslosen Zustand annähert. Gemäß einer alternativen oder zusätzlichen Ausführungsform ist daher allgemein ein Glaselement 1 mit einer Oberflächenstrukturierung 9 vorgesehen, welches zumindest einen strukturierten Bereich 90 der Glasoberfläche 2 umfasst, welcher durch Glasabtrag eine höhere Rauigkeit aufweist als ein angrenzender, unstrukturierter Bereich 91 der Glasoberfläche 2, und wobei der strukturierte Bereich 90, beziehungsweise dessen Spannungsprofil außerdem zumindest eine der folgenden Eigenschaften aufweist:
- der strukturierte Bereich 90 weist an der Glasoberfläche (2) eine Druckspannung auf, die betragsmäßig höher ist als die Spannung im angrenzenden unstrukturierten Bereich 91,
- die Druckspannung hat an der Oberfläche betragsmäßig einen Wert von kleiner als 5 MPa und wird betragsmäßig mit wachsender Tiefe kleiner.

Den mit dem hierin beschriebenen Verfahren bearbeiteten Glaselementen 1 ist, wie anhand der Fig. 7 bis Fig. 10 ersichtlich, auch gemeinsam, dass die Abnahme der oberflächlichen Druckspannung innerhalb einer geringen Tiefe erfolgt. Allgemein ist dazu in einer nicht auf spezielle Beispiele beschränkten Ausführungsform der Erfindung vorgesehen, dass die Druckspannung ausgehend vom Wert an der Glasoberfläche 2 innerhalb einer Tiefe von weniger als 0,03 mm auf eine Druckspannung von betragsmäßig weniger als 3 MPa absinkt.

Anhand der letzten Spalte der Tabelle 2 ist ersichtlich, dass verschiedene Matrixcodes in das Glas eingefügt wurden. Die Laserablation bietet hier den großen Vorteil, eine einfache, individuelle Kennzeichnung vornehmen zu können. Daher ist in einer Weiterbildung des Verfahrens vorgesehen, dass eine Charge mehrerer Glaselemente bereitgestellt wird, wobei die Glaselemente mit Oberflächenstrukturierungen 9, vorzugsweise in Gestalt von Matrixcodes 10 versehen werden, wobei sich die Oberflächenstrukturierungen voneinander unterscheiden, so dass die Glaselemente 1 anhand der Oberflächenmarkierungen unterscheidbar und identifizierbar sind. Da ein nachträglicher Kühlprozess entfallen kann, bietet sich hier weiterhin die Möglichkeit, temperaturempfindliche Produkte zu markieren. Gedacht ist hier unter anderem die Kennzeichnung von Glaselementen 1 in Form von vorbefüllten Glasbehältern. Beispielsweise können mit einem Pharmazeutikum befüllte Pharmabehälter individuell gekennzeichnet werden.

Die hier beschriebenen Glaselemente 1 und deren Herstellungsverfahren lassen sich generell zur individuellen Kennzeichnung von Glasprodukten verwenden. Insbesondere können neben Glasbehältern auch Glaswafer und optische Elemente, wie etwa Linsen oder Prismen markiert werden. Demgemäß ist in einer Ausführungsform eine Charge mit mehreren Glaselementen, insbesondere in Form von Glasbehältern, Glaswafern oder optischen Elementen vorgesehen, welche Oberflächenstrukturierungen 9 in Form von individuellen, sich unterscheidenden Codierungen aufweisen. Eine weitere Anwendung sind mikrofluidische Vorrichtungen, wie insbesondere Mikrofluidik-Chips. Solche Vorrichtungen weisen in der Regel eine dreidimensionale Strukturierung zur Flüssigkeitsaufnahme und Flüssigkeitsleitung auf. Solche Vorrichtungen wie auch andere Glaselemente können auch mehrere Lagen aufweisen. Als weitere Anwendung sind also allgemein Verbund-Glaselemente mit zumindest zwei verbundenen Glasteilen vorgesehen. Das Verbund-Glaselement kann insbesondere auch, wie in der Anwendung als Mikrofluidik-Vorrichtung auch strukturiert sein. Noch eine weitere Anwendung sind Glaselemente, die als Gehäuseelement, vorzugsweise für optoelektronische Bauelemente dienen. Beispielsweise ist daran gedacht, Glaswafer, die mit Halbleiterwafern verbunden werden, um auf Waferebene Bauelemente zu verpacken, individuell zu kennzeichnen.

Wie anhand der Tabelle mit den Laserparametern ersichtlich ist, kann die Bruchfestigkeit im Bereich einer Markierung nicht nur erhöht, sondern auch gezielt eingestellt werden. Dazu ist auch denkbar, mit einer Oberflächenstrukturierung eine Sollbruchstelle einzufügen. Allgemein ist daher in einem weiteren Aspekt dieser Offenbarung ein Glaselement 1 vorgesehen, welches eine Oberflächenstrukturierung 9 aufweist, welche zumindest einen strukturierten Bereich 90 der Glasoberfläche 2 umfasst, welcher durch Glasabtrag eine höhere Rauigkeit aufweist, als ein angrenzender, unstrukturierter Bereich 91 der Glasoberfläche 2, und wobei der strukturierte Bereich 90 ein insbesondere mittels Spannungsdoppelbrechung messbares mechanisches Spannungsprofil aufweist, bei welchem der strukturierte Bereich an der Glasoberfläche eine Druckspannung aufweist, die betragsmäßig höher ist, als die Spannung im angrenzenden unstrukturierten Bereich 91, wobei der Unterschied der Spannungen die Festigkeit des Glaselements am strukturierten Bereich so weit herabsenkt, dass die Oberflächenstrukturierung 9 eine Sollbruchstelle bildet. Auch das Merkmal, dass die Druckspannung mit wachsender Tiefe betragsmäßig kleiner wird und in eine Zugspannung übergeht, wobei die maximale Zugspannung betragsmäßig kleiner ist, als die Druckspannung an der Glasoberfläche 2 kann für eine solche Sollbruchstelle erfüllt sein.

Auch kann eine Oberflächenstrukturierung mit einer erhöhten Bruchfestigkeit in einem Glaselement mit einer weiteren, insbesondere als Sollbruchstelle wirkenden Oberflächenstrukturierung kombiniert werden. Beispielsweise wäre ein Glaswafer denkbar, der durch Sollbruchstellen in einzelne abtrennbare Dies, beziehungsweise Teile oder Plättchen unterteilt ist. Der Wafer kann dann eine kennzeichnende Oberflächenstrukturierung mit erhöhter Festigkeit in Gestalt eines durch Laserablation hergestellten Codes, insbesondere eines Matrixcodes aufweisen. Ebenso können die Teile oder Plättchen auch entsprechende Codierungen aufweisen. Demgemäß ist in einer weiteren Ausführungsform vorgesehen, dass das Glaselement 1 insbesondere zusätzlich zur Oberflächenstrukturierung 9 eine ablativ strukturierte Oberflächenstrukturierung aufweist, die eine Sollbruchstelle bildet. Dazu kann die weitere Oberflächenstrukturierung eine geringere Bruchfestigkeit als die Oberflächenstrukturierung 9 aufweisen.

### Bezugszeichenliste

| | |
|---|---|
| 1 | Glaselement |
| 2 | Glasoberfläche |
| 3, 5 | Seitenflächen von 1 |
| 7 | Kantenfläche von 1 |
| 9 | Oberflächenstrukturierung |
| 10 | Matrixcode |
| 12 | Riss |
| 15 | Übergangspunkt zwischen Druck- und Zugspannung |
| 20 | Ring-on-Ring-Testvorrichtung |
| 21 | Erster Ring |
| 22 | Zweiter Ring |
| 90 | Strukturierter Bereich |
| 91 | Unstrukturierter Bereich |
| 100 | Probenstreifen |

## Patentansprüche

1. Glaselement (1) mit einer Oberflächenstrukturierung (9), welche zumindest einen strukturierten Bereich (90) der Glasoberfläche (2) umfasst, welcher durch Glasabtrag eine höhere Rauigkeit aufweist als ein angrenzender, unstrukturierter Bereich (91) der Glasoberfläche (2), und wobei der strukturierte Bereich (90) ein insbesondere mittels Spannungsdoppelbrechung messbares mechanisches Spannungsprofil aufweist, wobei gilt:
- der strukturierte Bereich (90) weist an der Glasoberfläche (2) eine Druckspannung auf, die betragsmäßig höher ist, als die Spannung im angrenzenden unstrukturierten Bereich (91), und wobei der strukturierte Bereich (90) weiterhin zumindest eine der folgenden Eigenschaften aufweist:
- die Druckspannung wird betragsmäßig mit wachsender Tiefe kleiner und geht in eine Zugspannung über, wobei die maximale Zugspannung betragsmäßig kleiner ist als die Druckspannung an der Glasoberfläche (2),
- die Druckspannung hat an der Oberfläche betragsmäßig einen Wert von kleiner als 5 MPa und wird betragsmäßig mit wachsender Tiefe kleiner.

2. Glaselement (1) gemäß dem vorstehenden Anspruch, **gekennzeichnet durch** zumindest eines der folgenden Merkmale:
- das Produkt aus der maximalen Druckspannung mit der Tiefe des Übergangspunkts (15), bei der im strukturierten Bereich (90) die Druckspannung in eine Zugspannung übergeht, weist einen betragsmäßigen Wert von kleiner als 1 MPa*mm auf,
- der Übergangspunkt (15) zwischen Druck- und Zugspannung im strukturierten Bereich (90) liegt in einer Tiefe von höchstens 0,05 mm,
- die maximale Druckspannung im strukturierten Bereich (90) beträgt betragsmäßig höchstens 20 MPa,
- die Druckspannung sinkt ausgehend vom Wert an der Glasoberfläche (2) innerhalb einer Tiefe von weniger als 0,03 mm auf eine Druckspannung von betragsmäßig weniger als 3 MPa ab.

3. Glaselement (1) gemäß einem der vorstehenden Ansprüche, **dadurch gekennzeichnet, dass** der strukturierte Bereich (90) der Glasoberfläche (2) eine ablativ strukturierte Oberfläche aufweist.

4. Glaselement (1) gemäß einem der vorstehenden Ansprüche, **dadurch gekennzeichnet, dass** der zumindest eine, strukturierte Bereich (90) Bestandteil einer optisch erfassbaren Markierung (9), insbesondere eines Matrixcodes (10) ist.

5. Glaselement (1) gemäß dem vorstehenden Anspruch, **dadurch gekennzeichnet, dass** die Markierung (9) einen Zellkontrast nach ISO I/IEC TR 29158 von mindestens 0,7 aufweist.

6. Glaselement (1) gemäß einem der vorstehenden Ansprüche, **dadurch gekennzeichnet, dass** das Glaselement (1) aus Borosilikatglas oder Lithium-Aluminosilikatglas hergestellt ist.

7. Glaselement (1) gemäß einem der vorstehenden Ansprüche, **dadurch gekennzeichnet, dass** das Glas des Glaselements (1) zumindest eines der folgenden Merkmale aufweist:
- der mittlere thermische Längenausdehnungskoeffizient α_{(20-300 °C)} des Glases im Bereich von 20 °C bis 300 °C ist kleiner als 9·10⁻⁶ K⁻¹ , vorzugsweise kleiner als 6·10⁻⁶ K⁻¹, besonders bevorzugt kleiner als 4,5·10⁻⁶K⁻¹,
- das Glas weist eine Glasübergangstemperatur von kleiner als 600 °C, vorzugsweise kleiner als 570 °C auf.

8. Glaselement (1) gemäß einem der vorstehenden Ansprüche, welches zusätzlich zur Oberflächenstrukturierung (9) eine ablativ strukturierte Oberflächenstrukturierung aufweist, wobei die Oberflächenstrukturierung eine Sollbruchstelle bildet.

9. Verfahren zur Herstellung eines Glaselements (1), insbesondere gemäß einem der vorstehenden Ansprüche, welches eine Oberflächenstrukturierung (9) mit zumindest einem strukturierten Bereich (90) der Glasoberfläche (2) aufweist, welcher eine höhere Rauigkeit aufweist, als ein angrenzender, unstrukturierter Bereich (91) der Glasoberfläche (2), wobei der zumindest eine strukturierte Bereich (90) hergestellt wird, indem ein gepulster Laserstrahl auf die Glasoberfläche (2) gerichtet wird, dessen Laserpulse durch Ablation Glas von der Glasoberfläche (2) entfernen, und wobei die Ablationspunkte so nebeneinander eingefügt werden, dass
- der strukturierte Bereich (90) an der Glasoberfläche (2) eine Druckspannung aufweist, die betragsmäßig höher ist, als die Spannung in einem angrenzenden unstrukturierten Bereich (91), und dass
- die Druckspannung betragsmäßig mit wachsender Tiefe kleiner wird und in eine Zugspannung übergeht, wobei die maximale Zugspannung betragsmäßig kleiner ist als die Druckspannung an der Glasoberfläche (2).

10. Verfahren gemäß dem vorstehenden Anspruch, **gekennzeichnet durch** zumindest eines der folgenden Merkmale:
- die Pulse des auf die Glasoberfläche (2) gerichteten Laserstrahls haben eine Pulsdauer im Bereich von 100 fs bis 10 ps,
- die Pulse des auf die Glasoberfläche (2) gerichteten Laserstrahls haben eine Wellenlänge von zumindest 900 nm, vorzugsweise im Bereich von 900 nm bis 3 µm.

11. Verfahren gemäß einem der zwei vorstehenden Ansprüche, wobei der Laserstrahl das Gebiet mit dem herzustellenden strukturierten Bereich (90) mehrfach in nebeneinanderliegenden Pfaden überquert, um entlang dieser Pfade Glas durch Ablation zu entfernen, wobei die Pulsfrequenz des Laserstrahls und die Geschwindigkeit, mit welcher der Laserstrahl über die Glasoberfläche (2) geführt wird, so eingestellt werden, dass die Pulsdichte entlang eines Pfades während einer Überfahrt über das Gebiet höchstens 5 Pulse, vorzugsweise höchstens 2,5 Pulse pro Mikrometer beträgt.

12. Verfahren gemäß einem der drei vorstehenden Ansprüche, **gekennzeichnet durch** zumindest eines der folgenden Merkmale:
- das Gebiet mit dem herzustellenden strukturierten Bereich (90) wird vom Laserstrahl in nebeneinanderliegenden Pfaden so überfahren, dass die Pfade einen Abstand von höchstens 12 Mikrometern aufweisen,
- das Gebiet mit dem herzustellenden strukturierten Bereich (90) wird vom Laserstrahl in nebeneinanderliegenden Pfaden so überfahren, dass die Pfade einen Abstand aufweisen, der höchstens so groß ist, wie der Durchmesser des Laserstrahls auf der Glasoberfläche,
- der zeitliche Abstand aufeinanderfolgender Laserpunkte beträgt mindestens 1,5 Mikrosekunden,
- das Gebiet mit dem herzustellenden strukturierten Bereich (90) wird vom Laserstrahl mehrfach in nebeneinanderliegenden Pfaden überfahren.

13. Verfahren gemäß einem der vier vorstehenden Ansprüche, **dadurch gekennzeichnet, dass** eine Charge mehrerer Glaselemente (1) in Form von vorbefüllten Glasbehältern mit Oberflächenstrukturierungen (9), insbesondere in Form von Matrixcodes (10) versehen werden, die sich voneinander unterscheiden, so dass die Glaselemente (1) anhand der Oberflächenstrukturierungen (9) voneinander unterscheidbar und identifizierbar sind.

14. Charge mit mehreren Glaselementen (1) gemäß einem der Ansprüche 1 bis 8 oder hergestellt mit einem Verfahren gemäß einem der Ansprüche 9 bis 12, vorzugsweise in Form von Glasbehältern, Glaswafern, mikrofluidischen Vorrichtungen, Verbund-Glaselementen, Gehäuseelementen oder optischen Elementen, welche Oberflächenstrukturierungen (9) in Form von individuellen, sich unterscheidenden Codierungen aufweisen.
